# FASCICULE DE BREVET EUROPEEN

(11) **EP 0 747 663 B1**
(45) Date de publication et mention de la délivrance du brevet: **02.05.2001**
(21) Numéro de dépôt: 96420195.8
(22) Date de dépôt: 04.06.1996
(51) Int. Cl.: G01B 5/24, G01B 5/245, G01B 7/30, G01B 7/305, G21C 19/16

(54) **Dispositif de contrôle de la verticalité d'un mat d'une installation de levage et de manutention**
Vorrichtung zur Kontrolle der Vertikalneigung eines Mastes bei einer Installation zum Heben und Fördern
Device for the verticality control by a mast of a lifting and handling installation

(30) Priorité: 07.06.1995 FR 9506939
(43) Date de publication de la demande: 11.12.1996
(73) Titulaire: REEL S.A., F-69450 Saint Cyr au Mont d'Or (FR)
(72) Inventeur: Leveugle, Jean, 69006 Lyon (FR)
(74) Mandataire: Vuillermoz, Bruno

(56) Documents cités:
- EP-A- 0 220 117
- EP-A- 0 291 286
- EP-A- 0 411 841
- US-A- 5 254 835
- PATENT ABSTRACTS OF JAPAN vol. 016, no. 053 (P-1309), 10 Février 1992 & JP 03 252592 A (NUCLEAR FUEL IND LTD), 11 Novembre 1991,
- PATENT ABSTRACTS OF JAPAN vol. 018, no. 386 (M-1641), 20 Juillet 1994 & JP 06 108472 A (OGAWA SEISAKUSHO:KK), 19 Avril 1994,
- PATENT ABSTRACTS OF JAPAN vol. 006, no. 001 (M-105), 7 Janvier 1982 & JP 56 126530 A (MITSUBISHI ELECTRIC CORP), 3 Octobre 1981,

## Description

L'invention concerne un dispositif apte à permettre le contrôle de la verticalité d'un mât, et notamment d'un mât télescopique d'une installation de levage et de manutention.

De manière plus spécifique, mais pour autant non limitative, l'invention s'applique tout particulièrement au contrôle de la verticalité d'un mât d'une installation pour la manutention d'assemblages de combustibles nucléaires au sein d'un réacteur nucléaire.

De manière connue, le coeur d'un réacteur nucléaire est constitué de crayons ou aiguilles de combustibles regroupés afin de former des assemblages, susceptibles d'être manipulés indépendamment les uns des autres. Ces assemblages sont positionnés côte à côte, verticalement, au sein d'une structure interne et rigide, à savoir la cuve du réacteur, comprenant sensiblement vers le fond un sommier ou plaque de coeur, pourvu de réceptacles ou emplacements contigus, destinés à recevoir le pied desdits assemblages ainsi constitués. Le coeur du réacteur est immergé dans une piscine contenant un fluide de refroidissement et/ou de ralentissement des neutrons émis lors des réactions nucléaires assurant le dégagement d'énergie.

La manipulation de ces assemblages de combustibles nucléaires s'effectue au moyen d'une installation dite de manutention, comprenant une machine de manutention, également appelée machine de chargement, susceptible de se déplacer dans un plan horizontal au-dessus de la piscine, et munie d'un chariot de commande, également susceptible de se déplacer selon une autre direction horizontale au sein de la machine. Un mât télescopique est fixé par son extrémité supérieure audit chariot et est muni à son extrémité inférieure d'un organe de fixation, et notamment un grappin, susceptible de se coupler à l'extrémité supérieure d'un assemblage de combustibles en vue de sa manutention. Le positionnement de chacun des assemblages est codifié et dûment référencé sur le sommier, également dénommé plaque de coeur, de sorte que le déplacement relatif de la machine de chargement et du chariot qu'elle comporte doit être également parfaitement connu. De fait le déplacement de la machine et du chariot est en permanence parfaitement référencé, par exemple au moyen de roues codées. De fait, et afin de pouvoir positionner de manière correcte les assemblages au niveau des emplacements qui leurs sont attribués, il est indispensable que le mât télescopique soit parfaitement vertical, de telle sorte que l'extrémité inférieure du mât corresponde à l'emplacement dûment référencé et stocké en mémoire au niveau de la machine de chargement.

Par ailleurs, la machine de chargement et son chariot sont entièrement réglés lors de la mise en route initiale et leur positionnement est repéré par rapport au bâtiment (cuve, transfert, chemin de circulation), et notamment à l'aide d'un ensemble de codeurs, de cames et de détecteurs de proximité. Ces réglages sont normalement figés, dans la limite de la stabilité du bâtiment et dans la mesure où certaines pièces, notamment les galets de roulement de la machine de chargement et du chariot ne dépassent pas une certaine valeur.

Dans les faits, on observe des déréglages d'origines diverses, notamment inhérents aux interventions malencontreuses des équipes de maintenance ou d'assistance technique, modifiant le système de repérage ou, aux chocs du mât avec un obstacle entraînant une déformation plus ou moins importante de celui-ci affectant sa verticalité. Dans ce cas, on perd toute référence du chariot, donc du lieu de positionnement de l'assemblage.

Une solution consiste donc à contrôler la verticalité du mât. Ainsi, bien que cette solution soit actuellement mise en oeuvre, elle ne donne pas satisfaction. En effet, elle est particulièrement lourde à mettre en oeuvre, puisqu'elle nécessite en général une intervention rapprochée impliquant la vidange de la piscine, la mise en place du matériel de contrôle et l'exposition du personnel aux radiations. Cette correction de verticalité entraîne de fait la poursuite de l'arrêt du réacteur pour une à deux journées supplémentaires par rapport à la période prévue d'arrêt, notamment pour remplacement partiel du combustible, grevant de manière drastique le coût de fonctionnement de la centrale.

L'invention a pour objet de s'affranchir de ces différents inconvénients et notamment de simplifier de manière significative ce contrôle de verticalité en automatisant celui-ci.

De manière plus générale, ce contrôle de la verticalité s'applique à toute installation de levage ou de manutention.

Ce dispositif de contrôle de la verticalité d'un mât d'une installation de levage et de manutention, comprenant un pont susceptible de se déplacer selon une première direction horizontale, muni d'un chariot de commande susceptible de se déplacer au sein du pont selon une seconde direction horizontale perpendiculaire à la première, et auquel est solidarisée l'extrémité supérieure dudit mât. Il se caractérise :
- en ce qu'il comprend une structure de mesure de section transversale polygonale ouverte à sa face supérieure et positionnée de manière horizontale au fond de la zone d'intervention de ladite installation selon une position connue bien déterminée, les parois latérales verticales de ladite structure étant munies au niveau de leur face interne de capteurs de proximité ;
- en ce qu'il comprend un élément de contrôle, de section transversale de même forme que celle de la structure de mesure, solidarisé à l'extrémité inférieure du mât de telle sorte à prolonger linéairement celui-ci, et susceptible d'être inséré au sein de cette structure ;
- et en ce que les capteurs de proximité sont susceptibles de mesurer la distance les séparant de l'élément de contrôle, lesdites mesures étant centralisées et traitées afin de permettre la détermination des paramètres devant être modifiés au niveau des organes de réglage du mât, et notamment du pont et du chariot de commande.

En d'autres termes, l'invention consiste à prévoir un emplacement parfaitement référencé dans un plan horizontal, susceptible de recevoir un organe de mesure et de déterminer, en fonction du déplacement nécessaire du chariot pour permettre la mise en place de l'extrémité inférieure du mât au niveau de cet organe de mesure, les nouveaux réglages du mât par rapport au chariot.

Avantageusement, la section transversale tant de la structure de mesure que de l'élément de contrôle est carrée, les mesures des capteurs s'effectuant deux à deux.

Comme déjà dit, l'invention s'applique plus particulièrement au domaine des centrales nucléaires.

L'invention se rapporte également à une utilisation telle que définie dans la revendication 2.

Selon une caractéristique avantageuse de l'invention, la structure de mesure est constituée de deux éléments :
- un premier élément solidarisé au fond de la piscine selon une position connue, muni de pions de centrage verticaux ;
- un second élément amovible, venant s'enficher dans lesdits pions et comportant un gabarit de mesure constitué d'un cube, dont les quatre parois latérales verticales sont munies sur leur face interne d'un capteur de proximité, et dont la paroi supérieure est ouverte, afin de permettre l'insertion de l'élément de contrôle.

La manière dont l'invention peut être réalisée et les avantages qui en découlent ressortiront mieux de l'exemple de réalisation qui suit, donné à titre indicatif et non limitatif, à l'appui des figures annexées.

La figure 1 est une représentation schématique du dispositif conforme à l'invention au sein d'un réacteur nucléaire.

La figure 2 est une représentation schématique en section latérale de la structure de mesure conforme à l'invention, dont la figure 3 est une vue du dessus.

Les figures 4, 5 et 6 sont des représentations schématiques illustrant les différents défauts de verticalité du mât et leur traduction au niveau des mesures effectuées par le dispositif conforme à l'invention.

La description qui suit est plus particulièrement dirigée vers un réacteur de centrale nucléaire. Cependant, et ainsi que déjà indiqué en préambule de la présente demande, l'invention ne saurait se limiter à cette seule application, et toute installation de manutention et de levage est couverte par l'objet de l'invention.

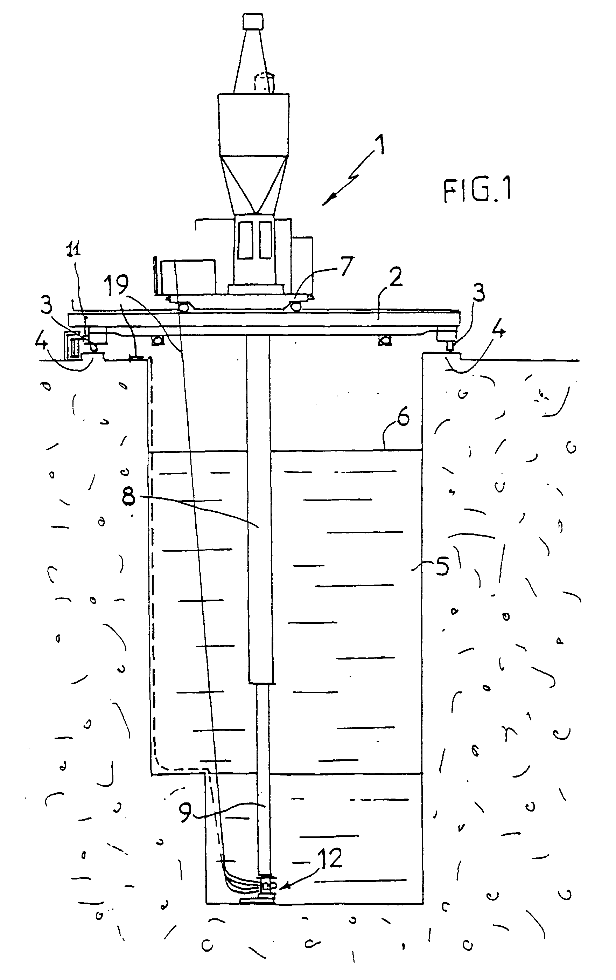

On a représenté sur la figure 1 un schéma de principe représentant une installation de manutention mettant en oeuvre le dispositif de l'invention. Cette installation (1) comporte tout d'abord un pont (2) muni de galets (3) de circulation sur des rails horiozntaux portés par les bords (4) de la piscine (5), dans laquelle est plongée la cuve du réacteur (non représentée) de type par exemple à eau pressurisée (PWR). On a par ailleurs représenté par (6) le niveau supérieur de la piscine, contenant de l'eau, agissant comme liquide de refroidissement et comme ralentisseur de neutrons.

De manière connue, la structure (2) porte elle-même des rails de guidage d'un chariot (7), mobile selon une direction horizontale perpendiculaire à la direction de déplacement du pont (2). Le chariot (7) porte un mât vertical (8), télescopique, par l'intermédiaire d'un mécanisme d'entraînement en rotation (non représenté), ce mécanisme étant typiquement constitué d'une couronne dentée. Le mât (8) est solidaire du chariot et comprend différents organes de commande et de contrôle (non représentés) permettant le déploiement et le reploiement d'un tube télescopique (9) coaxial avec le mât (8).

L'extrémité inférieure du tube télescopique (9) comporte un grappin ou système de préhension équivalent (10), destiné à saisir l'extrémité supérieure d'un assemblage d'éléments combustibles nucléaires, afin de permettre soit son chargement, soit son déchargement respectivement à l'intérieur du coeur du réacteur. Ces assemblages de combustibles sont en soi connus de sorte qu'il n'y a pas lieu de les décrire ici en détail. Il convient simplement de rappeler qu'ils comportent à leur extrémité inférieure un pied susceptible de coopérer avec des pions de positionnement ménagés au sein du sommier, lui-même positionné sensiblement dans le fond de la cuve du réacteur. Ces assemblages sont positionnés côte à côte selon une direction verticale, et sont agencés de telle sorte que le fluide de refroidissement, l'eau dans le cas d'espèce, puisse circuler entre les aiguilles constitutives desdits assemblages.

Le positionnement précis du pont (2) est en permanence connu au moyen d'une roue codée (11), engrènant au niveau de l'une des poutres latérales dudit pont, comme on peut l'observer sur la figure 1. De la même manière, le positionnement précis du chariot (7) sur le pont (2) est connu au moyen d'un organe équivalent (non représenté). En d'autres termes, le positionnement précis du chariot (7), et partant du mât (8) et du tube télescopique (9), par rapport à un référentiel fixe et plan, est parfaitement référencé. Par ailleurs, lorsque le mât (8) et le tube (9) sont parfaitement verticaux, l'extrémité inférieure dudit tube correspond exactement au repérage considéré du chariot. Il convient de préciser que les emplacements destinés à recevoir les assemblages de combustibles sont repérés par rapport à ce référentiel fixe.

Cependant, et ainsi que cela a été indiqué en préambule, le réglage du positionnement du chariot par rapport à ce référentiel ou la verticalité du mât télescopique (8, 9), peut subir des modifications inhérentes à de fausses manoeuvres ou à des chocs notamment du mât sur des obstacles en cours de chargement ou de déchargement des assemblages de combustible lors des phases d'arrêt du réacteur.

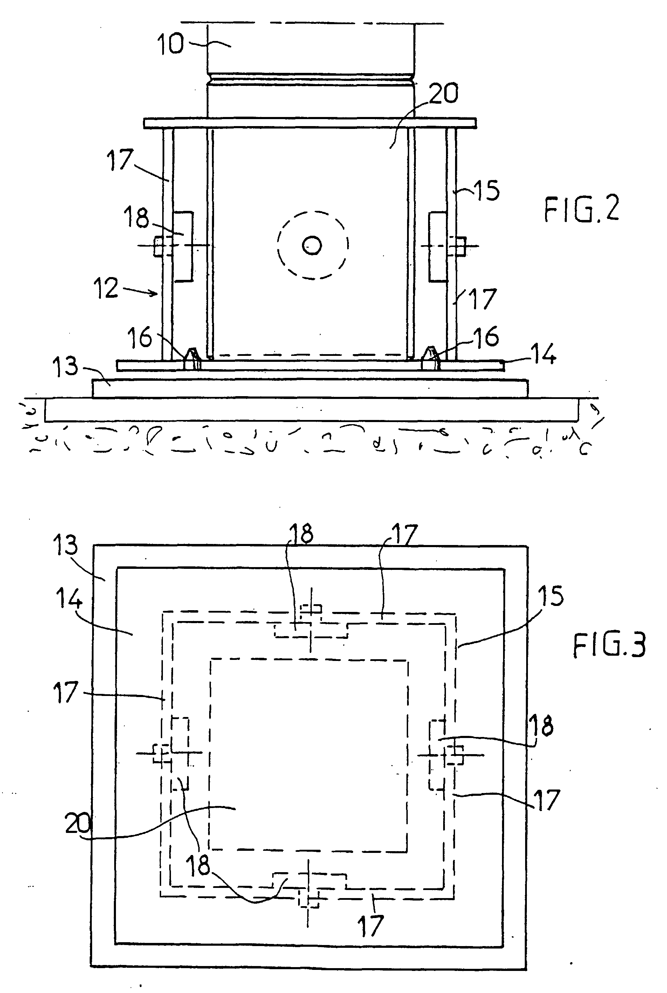

Afin de permettre la redéfinition du repérage du mât par rapport au chariot au sein du référentiel déterminé, l'invention propose de munir l'installation d'une structure de mesure plus particulièrement décrite en liaison avec les figures 2 et 3. Cette structure de mesure est fondamentalement constituée d'un gabarit (12), constitué d'une ossature métallique réalisée en acier inoxydable, donc susceptible d'être décontaminée le cas échéant, et positionné selon un lieu parfaitement défini par rapport à ce référentiel. Cette ossature métallique est constituée de plusieurs éléments distincts.

Elle comporte tout d'abord une dalle métallique (13), fixée définitivement à l'emplacement retenu, au niveau de plaques existantes, par exemple à l'emplacement du support des internes.

Cette dalle (13) est surmontée d'une platine de réglage (14), permettant de régler parfaitement l'horizontalité du support des capteurs (15) décrits plus en détail ultérieurement. Cette platine de réglage (14) est munie de pions de centrage (16), que l'on a schématiquement représenté sur la figure 2, et destinés à recevoir le support (15). L'extrémité supérieure des pions (16) est conique, lesdits pions garantissant une précision du positionnement de l'élément qu'ils sont destinés à recevoir inférieure à cinq dixièmes de millimètre. La dalle (13) et la platine (14) sont montées et réglées en une seule fois et restent en permanence au fond de la piscine.

Le support (15) est amovible et vient se centrer sur la platine (14) par l'intermédiaire des pions de centrage (16). Sa base est munie à cet effet d'orifice de diamètre correspondant. Le verrouillage du support sur la platine (14) s'effectue par exemple par un dispositif quart de tour, pouvant être actionné à distance.

Ce support (15) est de forme cubique, définie par quatre parois latérales et verticales (17), sur les faces internes desquelles sont fixés des capteurs de mesure (18).

La paroi supérieure du support (15) est ouverte, et présente des dimensions homothétiques par rapport à celles d'un assemblage de combustibles. Typiquement, elle est de forme carrée, dont les côtés ont une longueur excédant de trente (30) millimètres la longueur du carré défini par chacun des assemblages de combustibles.

Les capteurs (18) sont des capteurs de déplacement sans contact pouvant travailler sur des cibles amagnétiques dans l'air, dans l'eau, ou dans tout fluide de refroidissement et/ou ralentisseur de neutrons. Ils sont reliés par des cables électriques réunis en faisceau (19) à une zone de centralisation et de traitement de ces mesures, soit au niveau de l'un des bords de la piscine, soit au niveau du pupitre de commande de la machine de commande (2, 7) en phase de contrôle.

Les caractéristiques des capteurs permettent de mesurer avec précision les variations au dixième de millimètre de la distance les séparant de la surface parallèle de l'élément de contrôle décrit ci-après, leur faisant face.

Enfin, le dispositif conforme à l'invention comporte un élément de contrôle (20), susceptible d'être couplé au grappin (10) monté à l'extrémité inférieure du mât télescopique (8, 9), et présente une section transversale carrée identique à celle des assemblages de combustibles, et donc compatible avec les dimensions de la paroi supérieure du support (15).

Compte tenu des dimensions rappelées ci-dessus de la paroi ouverte du support (15), l'élément de contrôle disposé à l'extrémité du grappin (10) est susceptible de s'introduire par cette ouverture pour des déports du bas du mât de la machine de chargement inférieure à 15 mm dans chacune des quatre directions (+X, -X, +Y, -Y). Pour des déports de valeur supérieure, un premier décalage de la machine de chargement est à opérer, le décalage étant mesuré à l'aide du codeur de position de la machine de chargement, c'est-à-dire au niveau du pont (2) et du chariot (7).

Après introduction de l'élément de contrôle (20) dans le gabarit de mesure, et arrêt en position basse, on peut donc obtenir quatre mesures se contrôlant deux à deux au moyen des capteurs (18), ces mesures définissant parfaitement l'écart de position de l'élément de contrôle par rapport à l'axe du dispositif. Ces mesures sont centralisées au niveau d'un organe de traitement situé avantageusement dans le pupitre de la machine de chargement.

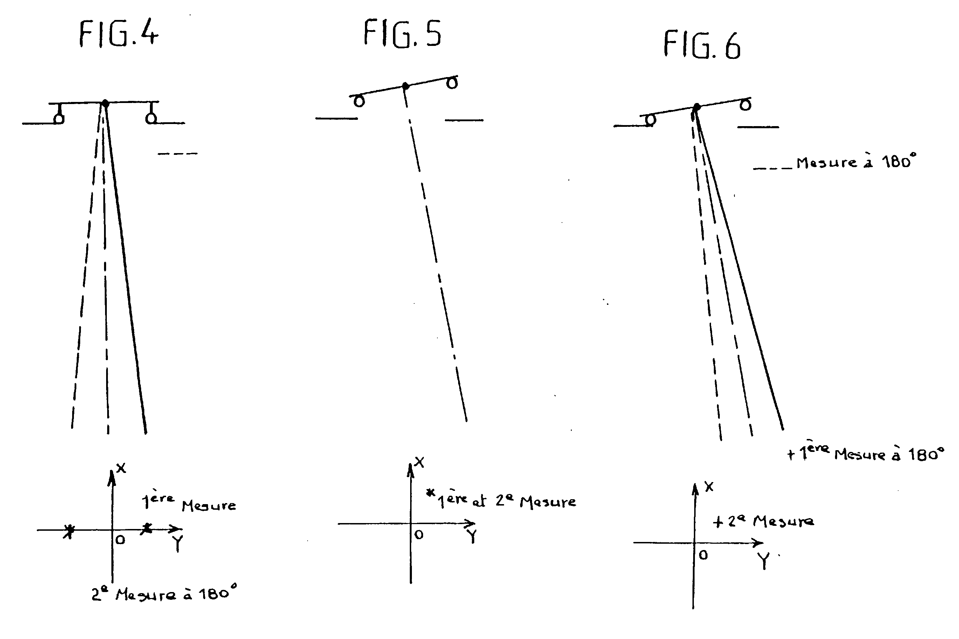

On a représenté sur les figures 4, 5 et 6 différentes possibilités de mesures rapportées au niveau du traitement. Deux mesures de la position du mât sont systématiquement effectuées, une rotation de 180° du mât étant effectuée entre les deux mesures. Ces mesures permettent ainsi de dissocier les défauts de rotation et de verticalité.

Ainsi, l'exemple représenté sur la figure 4 permet de mettre en évidence un défaut de rotation, c'est-à-dire d'inclinaison du mât, attendu qu'après rotation de 180°, on observe une parfaite symétrie des points de mesure par rapport à l'origine O du référentiel.

Dans la figure 5, on observe un défaut de verticalité du mât, dans la mesure où l'on observe une superposition des deux points de mesure avant et après rotation de 180° du mât.

Dans le schéma représenté sur la figure 6, on observe un double défaut d'inclinaison et de verticalité puisque il n'y a ni symétrie, ni superposition des deux mesures après rotation de 180° du mât.

Le traitement après analyse des mesures se traduit sous forme d'un synoptique représentant la position réelle du mât et l'indication des opérations à effectuer sur les organes de fixation du mât avec leur identification.

De fait, le dispositif conforme à l'invention permet d'effectuer un repérage précis du mât de la machine de chargement et donc de disposer des éléments permettant de contrôler la verticalité du mât. En outre, il permet de contrôler la concentricité du mât et d'obtenir des valeurs numériques précises correspondantes.

En fonction de ces valeurs, il est alors déterminé automatiquement les corrections à apporter aux organes de réglage du mât avec la nature précise des opérations à effectuer et la localisation précise des organes à régler. L'ensemble de ces opérations peut être réalisé autant de fois qu'il est nécessaire pendant la durée des déchargements et rechargements du coeur du réacteur, sans occasionner de perte de temps supplémentaire outre celle correspondant à la durée des mesures, et sans opération de modification du niveau piscine, donc sans vidange de celle-ci, et en fournissant un compte-rendu chiffré des valeurs rectifiées.

Par ailleurs, en cas de défaut à la suite d'un choc du mât avec un obstacle, il est possible de réaliser un réglage des galets de guidage si la déformation est légère. En revanche, en cas de déformation importante, il peut s'avérer nécessaire de remplacer le mât ou de réaliser une reprise d'usinage sur le mât déformé.

On conçoit donc tout l'intêret du dispositif conforme à l'invention. On peut mentioner qu'il permet d'éviter la présence d'opérateurs au fond de la piscine, l'introduction de matériel de contrôle, et la réduction considérable de la durée des opérations de contrôle. En outre, il convient d'ajouter la diminution des doses de radiation reçues par le personnel et la possibilité d'assurer les opérations de maintenance, contrôle, modifications du dispositif de contrôle dans l'atelier chaud, hors de la période d'arrêt de tranche.

## Revendications

1. Dispositif de contrôle de la verticalité d'un mât d'une installation de levage et de manutention, comprenant un pont (2) susceptible de se déplacer selon une première direction horizontale, muni d'un chariot de commande (7), susceptible de se déplacer au sein du pont (2) selon une seconde direction horizontale perpendiculaire à la première, et auquel est solidarisée l'extrémité supérieure dudit mât (8, 9), ***caractérisé :***
• en ce qu'il comprend une structure de mesure (12, 13, 14, 15, 17) de section transversale polygonale, ouverte à sa face supérieure et positionnée de manière horizontale au fond de la zone d'intervention de ladite installation selon une position connue bien déterminée, les parois latérales verticales (17) de la dite structure étant munies au niveau de leur face interne de capteurs de proximité (18);
• en ce qu'il comprend un élément de contrôle (20), de section transversale de même forme que celle de la structure de mesure, solidarisé à l'extrémité inférieure du mât (8, 9), de telle sorte à prolonger linéairement celui-ci, et susceptible d'être inséré au sein de cette structure ;
• et en ce que les capteurs de proximité (18) sont susceptibles de mesurer la distance les séparant de l'élément de contrôle (20), lesdites mesures étant centralisées et traitées afin de permettre la détermination des paramètres devant être modifiés au niveau des organes de réglage du mât relativement à l'ensemble pont (2) - chariot de commande (7).

2. Utilisation du dispositif de contrôle de la verticalité d'un mât d'une installation de levage et de manutention selon la revendication 1, pour le levage et la manutention d'assemblages de combustibles nucléaires, dans le coeur d'un réacteur nucléaire comportant un sommier ou plaque de coeur destiné à recevoir lesdits assemblages selon une orientation verticale, ledit coeur étant immergé dans une piscine (5) contenant un fluide de refroidissement et/ou de ralentissement de neutrons, le pont (2) étant constitué par une machine de manutention (2), susceptible de se déplacer dans un plan horizontal au dessus de la piscine (5), et munie d'un chariot de commande (7) également susceptible de se déplacer selon une direction horizontale perpendiculaire à la précédente, et le mât étant un mât télescopique (8, 9), fixé par son extrémité supérieure audit chariot (7), et muni à son extrémité inférieure d'un organe de fixation et de couplage (8) à l'extrémité supérieure d'un assemblage de combustibles,
• la structure de mesure (12, 13, 14, 15, 17) étant positionnée au fond de la piscine (5) selon une position horizontale connue bien déterminée;
• et l'élément de contrôle (20) étant de section transversale identique à celle des assemblages de combustibles.

3. Utilisation selon la revendication 2,
• un premier élément (13, 14) solidarisé au fond de la piscine selon une position connue, étant muni de pions de centrage verticaux (16) ;
• un second élément amovible (15), venant s'enficher dans lesdits pions (16) et comportant un gabarit de mesure (15) constitué d'un cube, dont les quatre parois latérales verticales (17) sont munies sur leur face interne d'un capteur de proximité (18), et dont la paroi supérieure est ouverte, afin de permettre l'insertion de l'élément de contrôle (20).

4. Utilisation selon l'une des revendications 2 et 3, les mesures effectuées par les capteurs (18) étant centralisées et traitées au niveau du pupitre de commande de la machine (2) en phase de contrôle.

## Claims

1. Device for checking the verticality of a mast of a lifting and handling installation, comprising a crane (2) capable of moving along a first horizontal direction equipped with a control carriage (7), capable of moving within the crane (2) along a second horizontal direction perpendicular to the first one, and to which the upper end of the said mast (8, 9) is fixed, characterized :
• in that it comprises a measurement structure (12,. 13, 14, 15, 17) of polygonal cross section, open at its upper face and positioned horizontally on the bottom of the servicing area of said installation in a well defined known position, the vertical side walls (17) of said structure being equipped on their inner face with proximity sensors (18),
• in that it comprises a checking element (20), with the same cross-sectional shape as that of the measurement structure, fixed to the lower end of the mast (8, 9), in such a way as to extend the latter linearly, and capable of being inserted within this structure,
• in that the proximity sensors (18) are capable of measuring the distance separating them from the checking element (20), the measurements being centrally collated and processed so as to allow determination of the parameters which have to be altered within devices for adjusting the mast relative to the crane (2) - control carriage (7) assembly.

2. Use of the device for checking the verticality of a mast of a lifting and handling installation according to claim 1, for lifting and handling nuclear fuel assemblies in the core of a nuclear reactor including a bed plate or core plate intended to receive said assemblies in a vertical orientation, said core being immersed in a cavity (5) containing a cooling and/or neutron moderating fluid, the crane (2) being constituted, of a handling machine (2), capable of moving in a horizontal plane above the cavity (5), and equipped with a control carriage (7) also capable of moving along a horizontal direction perpendicular to the preceding one, and the mast being a telescopic mast (8, 9), fixed by its upper end to said carriage (7), and equipped at its lower end with a unit for fixing and coupling (8) to the upper end of a fuel assembly,
• the measurement structure (12, 13, 14, 15, 17) being positioned on the bottom of the cavity (5) in a well defined known horizontal position,
• the checking element (20) being of the same cross-sectional shape as that of the fuel assemblies.

3. Use of the device for checking the verticality of a mast of an installation for lifting and handling nuclear fuel assemblies according to claim 2, wherein the measurement structure consists of two elements :
• a first element (13, 14) fixed to the bottom of the cavity (5) in a known position, being equipped with vertical centring pins (16) ;
• a second removable element (15), being plugged into said pins (16) and including a measurement template (15) consisting of a cube, the four vertical side walls (17) of which being equipped on their inner face with a proximity sensor (18), and the upper wall of which being open, so as to allow insertion of the checking element (20).

4. Use of the device for checking the verticality of a mast of an installation for lifting and handling nuclear fuel assemblies according to claims 2 and 3, wherein the measurements taken by the sensors (18) are centrally collated and processed within the control console of the machine (2) in the checking phase.

## Patentansprüche

1. Vorrichtung zur Kontrolle der Vertikalneigung eines Masten bei einer Einrichtung zum Heben und Fördern, umfassend eine Brücke (2), die sich entlang einer ersten Horizontalrichtung verschieben kann, versehen mit einem Steuerschlitten (7), der sich innerhalb der Brücke (2) entlang einer zweiten Horizontalrichtung senkrecht auf die erste verschieben kann und mit dem das obere Ende des Masten (8, 9) fest verbunden ist, dadurch gekennzeichnet, daß:
- sie eine Meßstruktur (12, 13, 14, 15, 17) mit einem polygonalen Querschnitt umfaßt, die an ihrer Oberseite offen und horizontal am Boden der Eingriffszone der Einrichtung nach einer ganz bestimmten bekannten Position angeordnet ist, wobei die vertikalen Seitenwände (17) der Struktur im Bereich ihrer Innenseite mit Näherungsfühlern (18) versehen sind;
- sie ein Kontrollelement (20) mit einem Querschnitt derselben Form wie jener der Meßstruktur umfaßt, das mit dem unteren Ende des Masten (8, 9) fest verbunden ist, so daß es diesen linear verlängert und in der Lage ist, in diese Struktur eingeführt zu werden;
- die Näherungsfühler (18) den Abstand messen können, der zwischen ihnen und dem Kontrollelement (20) liegt, wobei diese Messungen zentralisiert und bearbeitet werden, um die Bestimmung der Parameter zu ermöglichen, die im Bereich der Einstellelemente des Masten in bezug auf die Einheit Brücke (2) - Steuerschlitten (7) zu ändern sind.

2. Verwendung der Vorrichtung zur Kontrolle der Vertikalneigung eines Masten einer Einrichtung zum Heben und Fördern nach Anspruch 1 zum Heben und Fördern von Kernbrennstoffbündeln im Kern eines Kernreaktors, umfassend einen Kernbalken oder eine Kernplatte, die für die Aufnahme der Bündel nach einer vertikalen Ausrichtung bestimmt sind, wobei der Reaktorkern in ein Bad (5) eingetaucht wird, welches ein Kühlfluid und/oder Neutronenbremsfluid enthält, wobei die Brücke (2) von einer Fördermaschine (2) gebildet wird, die sich in einer horizontalen Ebene über dem Bad (5) verschieben kann und mit einem Steuerschlitten (7) versehen ist, der sich ebenfalls entlang einer Horizontalrichtung senkrecht auf die vorhergehende verschieben kann, wobei der Mast ein Teleskopmast (8, 9) ist, der mit seinem oberen Ende am Schlitten (7) befestigt ist und an seinem unteren Ende mit einem Element (8) zur Befestigung oder Ankopplung am oberen Ende eines Brennstoffbündels versehen ist,
- wobei die Meßstruktur (12, 13, 14, 15, 17) am Boden des Bades (5) entlang einer ganz bestimmten bekannten Horizontalrichtung angeordnet ist;
- wobei das Kontrollelement (20) einen identischen Querschnitt wie jener der Brennstoffbündel aufweist.

3. Verwendung nach Anspruch 2,
- bei der ein erstes Element (13, 14), das mit dem Boden des Bades entlang einer bekannten Position verbunden ist, mit vertikalen Zentrierstücken (16) versehen ist;
- bei der ein zweites abnehmbares Element (15) in die Stücke (16) eingesetzt wird und eine Meßlehre (15) umfaßt, welche von einem Würfel gebildet wird, dessen vier vertikalen Seitenwände (17) auf ihrer Innenseite mit einem Näherungsfühler (18) versehen sind und dessen obere Wand offen ist, um den Einsatz des Kontrollelements (20) zu ermöglichen.

4. Verwendung nach einem der Ansprüche 2 und 3, bei der die von den Fühlern (18) durchgeführten Messungen im Bereich des Steuerpultes der Maschine (2) in der Kontrollphase zentralisiert und bearbeitet werden.
